# EUROPÄISCHE PATENTSCHRIFT

(11) **EP 0 834 476 B1**
(45) Veröffentlichungstag und Bekanntmachung des Hinweises auf die Patenterteilung: **16.01.2002**
(21) Anmeldenummer: 97117194.7
(22) Anmeldetag: 03.10.1997
(51) Int. Cl.: C02F 3/12, C02F 3/00

(54) **Verfahren und Anordnung zum Abbau organischer Abwasser-Schadstoffe**
Process and installation for the degradation of organic contaminants in waste waters
Procédé et installation pour la dégradation des contaminants organiques dans les eaux usées

(30) Priorität: 04.10.1996 DE 19640899
(43) Veröffentlichungstag der Anmeldung: 08.04.1998
(73) Patentinhaber: Besten, Hans-Werner, 58332 Schwelm (DE)
(72) Erfinder: Besten, Hans-Werner, 58332 Schwelm (DE)
(74) Vertreter: Stoffregen, Hans-Herbert, Dr. Dipl.-Phys. Patentanwalt

(56) Entgegenhaltungen:
- EP-A- 0 695 720
- DE-A- 3 227 488
- DE-A- 4 024 947
- PATENT ABSTRACTS OF JAPAN vol. 017, no. 321 (C-1072), 18. Juni 1993 & JP 05 031488 A (SUMITOMO JUKIKAI ENVIROTEC KK;OTHERS: 01), 9. Februar 1993

## Beschreibung

Die Erfindung bezieht sich auf ein Verfahren und eine Anordnung zum Abbau organischer Abwasser-Schadstoffe unter Verwendung frei suspendierter Bakterien nach dem Oberbegriff des Patentanspruchs 1 bzw. des Patentanspruchs 8.

Im Zuge der verstärkten Trink- und Grundwasserproblematik wird die Aufbereitung von Abwasser, insbesondere der Abbau organischer Abwasser-Schadstoffe immer wichtiger. Im kommunalen Bereich wurden die dem Verursacher belasteten Abwasserkosten nach den Schadstoff-Spitzenwerten berechnet. Hohe Schwankungen in der Abwasserkonzentration führen daher zu erheblichen Abwasser-Kostensteigerungen. Viele Industrieunternehmen, insbesondere solche mit stark schwankenden Abwasserkonzentrationen, legen aus Kostengründen die Abwasserreinigung unmittelbar an die Quelle des Abwasseranfalls. Dadurch können kommunale Kläranlagen entlastet und Abwassergebühren eingespart werden.

Zum Abbau organischer Schmutzfrachten bei hochkonzentrierten Abwässern haben sich sogenannte partiell-aerobe Verfahren bewährt, bei denen die Belüftung des Abwassers und gegebenenfalls die Zugabe von Minimumstoffen zum Abwasser unter Steuerung des Redoxpotentials erfolgt. Unter den Bedingungen des partiell-aeroben Verfahrens sind bekanntlich besonders die Enzyme der Atmungskette der Bakterien bzw. Mikroorganismen aktiv. Nur ein vergleichsweise geringer Teil der Schadstoffe wird für den Aufbau von Biomasse genutzt. Der überwiegende Teil der Schadstoffe wird direkt in Kohlendioxid (CO₂) und Wasser (H₂O) umgesetzt. Wichtig ist, dass die zugeführte Luftmenge so dosiert wird, dass die Bakterien das Redoxpotential ihres Mediums in optimale und atmungsaktive Bedingungen führen können. Es wurde gefunden, dass es bei einer Anhebung des Redoxpotentials durch Erhöhung der Luftzufuhr zu einer verstärkten Flockenbildung kommen kann.

Eine Absenkung des Redoxpotentials unterhalb von -300 mV vermindert zwar die Gefahr einer Flockenbildung, verschlechtert aber häufig den Abbauwirkungsgrad der Bakterien.

Aus der DE-OS 32 27 488 ist ein partiell-aerobes Verfahren bekannt, bei dem das Redoxpotential auf einen möglichst konstanten Wert zwischen -200 mV und -300 mV und der pH-Wert ebenfalls im Wesentlichen konstant im Bereich zwischen 7,0 und 9,0 vorzugsweise 8,0 bis 8,1 eingestellt werden sollen.

In der Praxis hat sich jedoch gezeigt, dass mit dem bekannten partiell-aeroben Verfahren kritische Konzentrationsschwankungen und vor allem Änderungen der pH-Werte im Abwasser nicht optimal beherrschbar waren, und die Abbauaktivität der Mikroorganismen unter Umständen verringert wird.

Der Erfindung liegt die Aufgabe zu Grunde, das bekannte partiell-aerobe Verfahren und die Anordnung zu dessen Durchführung so zu verbessern, dass eine äußerst hohe, unter Umständen sogar optimale Abbaurate der Schadstoffe ohne beachtliche Flockenbildung selbst bei starken pH-Wert-Schwankungen des Abwassers erreicht wird.

Die Erfindung geht bei der Lösung dieser Aufgabe von der Erkenntnis aus, dass die Bakterien bzw. Mikroorganismen bei schwankenden pH-Werten ihre volle Abbauaktivität entfalten, wenn eine bestimmte Beziehung zwischen den Redoxpotential- und pH-Werten aufrechterhalten wird. Mit anderen Worten, Redoxpotential und pH-Wert brauchen nicht konstant gehalten zu werden, sofern ihre Änderung in gegenseitiger Abhängigkeit durchgeführt wird.

Verfahrensmäßig ist die Erfindung zur Lösung der ihr zu Grunde liegenden Aufgabe dadurch gekennzeichnet,
a) dass verschiedenen pH-Werten zugeordnete Redoxpotentialwerte ermittelt werden, bei denen Schadstoffe im Reaktor optimal biologisch abgebaut werden;
b) dass aus den ermittelten Werten eine Kennlinie gebildet und gespeichert wird;
c) dass aus den betrieblich gemessenen pH-Werten (pH-Istwerten) und den Kennlinienwerten in einem Prozessrechner eine Führungsgröße gebildet und mit betrieblich gemessenen Redoxpotentialwerten (Redoxpotential-Istwerten) verglichen wird, und
d) dass die zugeführte Luftmenge in Abhängigkeit von den Redoxpotential-Istwerten unter Führung der pH-Istwerte geregelt wird.

Die Erfindung unterstützt die Mikroorganismen-Kultur darin, nach starken pH-Wert-Änderungen relativ kurzfristig einen Gleichgewichts-pH-Wert einzustellen. Zu diesem pH-Wert gehört ein vorgegebenes Redoxpotential, das durch Regelung der Menge an zugeführter Luft, d. h. an zugeführtem Luftsauerstoff eingestellt wird.

Wie oben gesagt, werden pH-Wert und Redoxpotential automatisch so aufeinander abgestimmt, dass die Mikroorganismen optimale Lebensbedingungen im Reaktionsraum und im Abwasser vorfinden. Sinkt der pH-Wert beispielsweise auf 6,9 ab, so wird unter Änderung des zugeführten Luftsauerstoffs das Redoxpotential auf einen entsprechend geänderten Wert, zum Beispiel -150 mV geregelt. Es wurde gefunden, dass jedem pH-Wert ein für die Aktivität der Mikroorganismen optimales Redoxpotential zugeordnet ist. Diese Kennlinie des pH-Wertes in Zuordnung zum entsprechenden Redoxpotential lässt sich ohne Schwierigkeiten vorausbestimmen, speichern und während der Regelung zur Bildung der Führungsgröße aus dem Speicher abrufen.

Mit Hilfe des erfindungsgemäßen Verfahrens gelingt es, auch bei relativ stark schwankenden pH-Werten die Menge der zugeführten Luft so zu regeln, dass sich keine Flocken bilden. Es wird aber hinreichend viel Luftsauerstoff zur Verfügung gestellt, um einen ausreichenden Energiegewinn der Bakterien über deren Atmungskette zu gewährleisten. Dabei vermehren sich die Bakterien in dem Maße, dass Verluste durch Verdünnung bei neuer Abwasserzufuhr und durch Abführen von vorgeklärter Lösung ausgeglichen werden. Es kann den Bakterien dabei stets ausreichend Luftsauerstoff zur Verfügung gestellt werden, damit sie organische Schmutzfrachten wirksam veratmen und dementsprechend vermindern können. Änderungen des pH-Wertes ändern bei dem erfindungsgemäßen Verfahren nichts oder nur wenig an der Abbauaktivität der Mikroorganismenkultur im Reaktor. Unter diesen Bedingungen kann sich die Mikroorganismenkultur extrem schnell an Konzentrations- und Schadstoffänderungen anpassen. Die Generationszeit der Mikroorganismen beträgt ca. einen Tag.

Die Anordnung zur Durchführung des erfindungsgemäßen Verfahrens ist durch die Merkmale des Patentanspruchs 8 gekennzeichnet.

Wesentlich ist, dass ein Prozessrechner mit den pH-Wert und das Reproxpotential laufend messenden Mitteln sowie mit einem die Luftmenge steuernden Stellglied gekoppelt ist und eine Speichereinrichtung aufweist und dass der Prozessrechner so ausgebildet ist, dass er die dem Abwasser zugeführte Luftmenge in Abhängigkeit von den gemessenen Redoxpotential-werten unter Führung der gemessenen pH-Werte nach einer in der Speichereinrichtung gespeicherten vorgegebenen Beziehung regelt. Die Abbaubedingungen im Reaktionsraum werden mit Hilfe dieser Anordnung laufend so eingestellt, dass die Mikroorganismenkultur optimale Luftsauerstoffbedingungen bzw. ein optimales Redoxpotential vorfindet.

Vorteilhafte Weiterbildungen der Erfindung sind in den Unteransprüchen gekennzeichnet.

Die Regeleinrichtung sollte vorzugsweise so ausgebildet sein, dass sich das Redoxpotential mit einer Genauigkeit von ± 20 mV auf den zum pH-Istwert gehörigen optimalen Redoxpotentialwert einstellt.

Ein großer Vorteil des erfindungsgemäßen Verfahrens und der dazugehörigen Anordnung besteht darin, dass dem Reaktionsraum hoch- und höchstbelastete Abwässer mit großen Schwankungsbreiten des pH-Wertes zugeführt werden können. Die CSB-Konzentration kann von 3.000 bis über 100.000 mg/O₂/l betragen. Selbst bei stark unterschiedlichen pH-Werten findet der Abbau der organischen Schadstoffe mit gleichbleibender Intensität statt, so dass sich das erfindungsgemäße Verfahren durch eine außergewöhnliche Stabilität auszeichnet. Der pH-Wert der Abwässer kann in Extremfällen zwischen 3 und 12 betragen, ohne dass wesentliche Neutralisationsmaßnahmen notwendig werden.

Im Folgenden wird die Erfindung anhand eines in der Zeichnung schematisch dargestellten Ausführungsbeispiels näher erläutert. In der Zeichnung zeigen:
- Fig. 1: ein Prinzipschaltbild der erfindungsgemäßen Anordnung zum Abbau organischer Abwasser-Schadstoffe; und
- Fig. 2: eine Kennlinie, welche die Beziehung zwischen pH- und Redoxpotential-Werten zur Einstellung optimaler Abbaubedingungen im Abwasser bei 37 °C veranschaulicht.

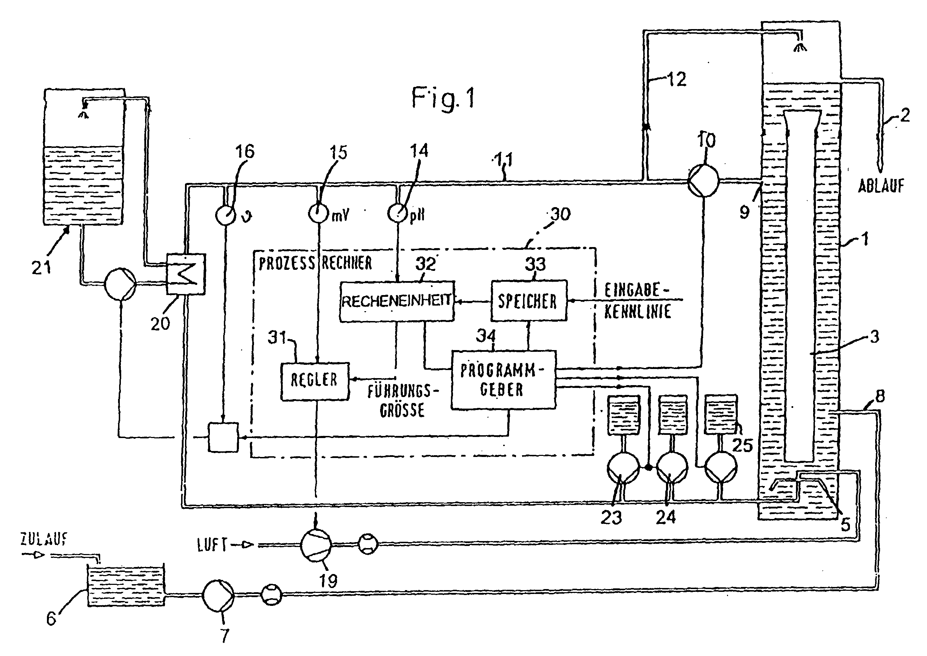

Die erfindungsgemäße Abwasserreinigung findet in dem in Fig. 1 dargestellten Ausführungsbeispiel in einem Hochreaktor 1 statt. Dieser ist bis etwa zur Höhe eines Ablaufs 2 mit dem zu reinigenden Abwasser gefüllt. In dem Hochreaktor 1 ist mit allseitigem Abstand ein Innenrohr 3 mit im Wesentlichen vertikaler Achse angeordnet. Das Innenrohr 3 ist an sich zylindrisch, weist aber am oberen Ende einen Einlauftrichter auf. Mit Abstand unterhalb des offenen Endes des Innenrohrs 3 ist eine Belüftungsdüsenanordnung 5 vorgesehen. Durch die Belüftungsdüsenanordnung 5 wird in einer weiter unten beschriebenen Weise Behandlungsluft im Wesentlichen gleichmäßig verteilt und nach unten in das zu reinigende Abwasser eingeleitet. Die resultierenden Luftbläschen steigen in gleichmäßiger Verteilung vornehmlich außerhalb des Innenrohrs nach oben, wodurch im praktisch blasenfreien Innenrohr durch den Dichteunterschied eine abwärts gerichtete Strömung entsteht. Untersuchungen haben gezeigt, dass eine Strömungsgeschwindigkeit im Innern des Innenrohrs 3 von 2,5 bis 3,5 m/s zu guten Ergebnissen führt. Die Bewegung des Wasser-Luftgemisches unterhalb des Innenrohrs verhindert Ablagerungen und Verstopfungen im Bodenbereich des Hochreaktors 1.

Die relativ große Höhe des Wasserspiegels innerhalb des Hochreaktors 1 begünstigt die Ausnutzung des durch die Sprühanordnung 5 zugeführten Sauerstoffs. Bei einer Höhe von 7 m Wassersäule beträgt die Sauerstoffausnutzung ca. 55 %. Ab ca. 14 m Wassersäule erhöht sich die Sauerstoffausnutzung auf Werte über 90 %.

Das anhand von Fig. 1 beschriebene partiell-aerobe Verfahren verhält sich außerordentlich stabil. Dies liegt vor allem daran, dass die Bakterien individualisiert gehalten werden und dadurch rascher wachsen können als vergleichbare Bakterien innerhalb einer Belebtschlammflocke. Die Population an Mikroorganismen im Hochreaktor 1 kann sich innerhalb von wenigen Stunden verdoppeln und an Konzentrationssprünge oder unterschiedliche Inhaltsstoffe anpassen. Eine zusätzliche Vergleichmäßigung der Schadstoffe lässt sich durch einen Vorlagebehälter 6 erreichen, der aber, wie die folgende Beschreibung zeigen wird, in vielen Fällen überflüssig ist. Aus dem Vorlagebehälter 6 wird das zu reinigende Abwasser über eine Pumpe 7 und einen Zulauf 8 in den Innenraum des Hochreaktors 1 eingeleitet. Der Zulauf 8 mündet in den Ringraum zwischen Reaktorwand und Innenrohr 3.

An einer Stelle 9 des Hochreaktors, an der das Reaktorabwasser eine für die Verfahrensführung repräsentative Zusammensetzung hat, wird eine Teilströmung des Abwassers von einer Förderpumpe 10 in einen zu Mess- und Steuerzwecken dienenden Beipass 11 abgesaugt. Ein anderer Teilstrom wird hinter der Umwälzpumpe 10 abgezweigt und über eine Stichleitung 12 in den Bereich oberhalb des Abwasserspiegels des Reaktors 1 eingeleitet und von dort auf den Wasserspiegel aufgesprüht. Dadurch gelingt es, eine Schaumbildung auf der ohnehin kleinen Oberfläche des Hochreaktors weitgehend zu verhindern.

Entlang der Beipassleitung wird das abgezweigte Abwasser an verschiedenen Messfühlern 14, 15 und 16 vorbeigeführt, über einen Wärmetauscher 20 eines Kühlkreislaufes geleitet und gegebenenfalls dort temperiert, an Neutralisationsmittel-Dosierstellen 23 und 24 und einer Nährstoff-Zugabestation 25 vorbei und in eine Mischkammer zum Mischen mit der Luft aus der Verteileranordnung 5 eingeleitet.

Von den Messfühlern 14 und 15 wird der pH-Wert bzw. der Redoxpotentialwert gemessen. Der pH-Wert liegt für das partiell-aerobe Verfahren optimal zwischen den Werten 7 und 9. Das partiell-aerobe Verfahren bildet ein ausgezeichnetes Puffersystem und hält den pH-Wert auch ohne Zufuhr von Neutralisationsmitteln (Dosiervorrichtungen 23 und 24) innerhalb des Sollbereichs. Die organischen Säuren werden durch die Mikroorganismen abgebaut, und alkalische Substanzen, wie NaOH werden durch das gebildete Co₂ gepuffert. Vornehmlich im Anfahrbetrieb oder bei empfindlichen Störungen der Mikroorganismenpopulation z. B. durch Giftstöße, kann eine Zudosierung von Neutralisationsmitteln (23 oder 24) notwendig werden. Diese werden allerdings erst bei extremen pH-Werten, z. B. kleiner 3 oder größer 12, zudosiert.

Nach solchen Giftstößen kann das erfindungsgemäße partiell-aerobe Verfahren fortgesetzt werden, ohne mit frischen Mikroorganismen angeimpft werden zu müssen. Es müssen nur der pH-Wert und die Temperatur kurzfristig in einem mittleren Bereich gehalten werden, und die Population der Mikroorganismen regeneriert sich innerhalb von 24 Stunden.

Der wesentliche Parameter des partiell-aeroben Verfahrens ist das Redoxpotential, welches an der Messstelle 15 gemessen wird. Man kann das Redoxpotential als das Maß für die Bereitschaft des Mediums zur weiteren Sauerstoffaufnahme ansehen. Es wurde gefunden, dass ein günstiger Redoxpotentialwert für den Betrieb des partiell-aeroben Verfahrens zwischen -200 und -300 mV liegt. In diesem Bereich treten nur selten Belebtschlammflocken auf. Dennoch ist in dem Abwasser im Innenraum des Hochreaktors 1 eine durchaus aktive Mikroorganismenpopulation anzutreffen. Diese Mikroorganismenpopulation besteht, wie eine mikroskopische Untersuchung zeigt, fast ausschließlich aus Bakterien.

Bekanntlich werden die Schadstoffe im Abwasser unter angemessenen Bedingungen in Gegenwart der Biomasse deutlich abgebaut. Die Abbaurate ist abhängig von den Inhaltsstoffen und der Abwasserkonzentration. Eine optimale Veratmungsleistung gibt erst bei hohen Abwasserkonzentrationen, beispielsweise ab einem CSB-Wert von ca. 5000 mg/l.

Wie oben gesagt, ändert man die Menge des zugeführten Luftsauerstoffs in Abhängigkeit von dem am Meßgerät 15 gemessenen Redoxpotentialwert. Die Erfindung geht von der Erkenntnis aus, dass eine gegenseitige Abhängigkeit zwischen pH-Wert und Redoxpotentialwert besteht und bei der Regelung der Luftzufuhr durch die Dosierpumpe 19 berücksichtigt und aufrechterhalten werden muss. Nur so lassen sich auf höchst einfache Weise starke Schwankungen des behandelten Abwassers kompensieren und optimale Bedingungen im Dauerbetrieb im Hochreaktor 1, verbunden mit einer hohen Abbauleistung, gewährleisten.

Zu diesem Zweck ist bei dem Ausführungsbeispiel gemäß Fig. 1 ein Prozessrechner 30 vorgesehen, zu dem ein Regler 31, eine Recheneinheit 32 und ein Speicher 33 sowie ein Programmgeber 34 gehören. Im Regler 31 wird der durch die Redoxmessung gewonnene Redoxpotentialwert aber nicht einfach mit einem konstanten Sollwert, sondern mit einer von dem pH-Istwert abhängigen Führungsgröße in Beziehung gesetzt. Die Führungsgröße wird in der Recheneinheit 32 aus dem pH-Istwert mit Hilfe der im Speicher 33 gespeicherten Kennlinie gewonnen.

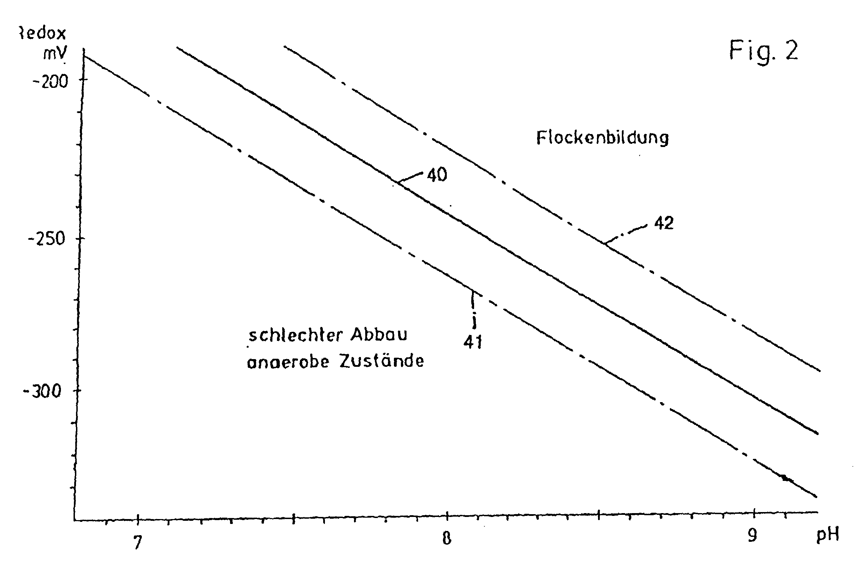

Die Kennlinie mit der Sollbeziehung zwischen pH-Wert und Redoxpotentialwert ist in Fig. 2 der Zeichnung schematisch dargestellt. Die Kennlinie ist in dem hier angegebenen pH-Bereich eine Gerade mit einer zuvor durch Untersuchungen bestimmten Steigung (im Beispiel ca. 88 mV pro pH bei 37 °C). Zu beiden Seiten der Kennlinie 40 ist ein von jeweils strichpunktierten Linien 41 und 42 begrenztes Toleranzfeld angegeben, in welchem die Mikroorganismenpopulation ohne schädliche Nebeneffekte eine hohe Abbauleistung erbringt. Bei zu negativem Redoxpotential ergeben sich, wie Fig. 2 zeigt, schlechte Abbauverhältnisse und anaerobe Zustände. Zur anderen Seite hin kommt es bei Überschreiten der Grenze 42 zu einer zunehmenden Flockenbildung.

Wichtig ist, dass mit Hilfe des Prozessrechners 30 dafür gesorgt wird, dass selbst bei stark schwankenden pH-Werten das Redoxpotential und damit die Luftzufuhr den schwankenden pH-Werten folgen. Die richtige Kennlinie 40 und gegebenenfalls auch die Grenzen 41 und 42 sind bei dem beschriebenen Beispiel vor Betriebsbeginn in den Speicher 33 eingegeben. Der Speicher 33 ist programmierbar.

Bekanntlich soll die Temperatur beim partiell-aeroben Verfahren im Bereich zwischen 20 bis 40 °C, optimalerweise zwischen 35 und 39 °C liegen. Beim Abbau der Schadstoffe wird unter den Bedingungen des partiell-aeroben Verfahrens Energie freigesetzt. Bei hohem CSB-Gehalt von beispielsweise 10.000 mg/l liegt die Abwassertemperatur bei nahezu 42 °C. Bei dieser Temperatur sind die Mikroorganismen nicht mehr lebensfähig. In dem in Fig. 1 dargestellten Ausführungsbeispiel kann das Abwasser im Beipass 11 über den Wärmetauscher 20 auf eine geeignete Solltemperatur gekühlt werden. Solltemperatur und Kühltakt werden durch den Programmgeber 34 gesteuert, der auch bei Bedarf für die Betätigung der Nährstoffdosierung und der Neutralisationsmittel sorgt.

Die Mikroorganismen benötigen nicht nur die Schmutzfracht als Nahrung und den Luftsauersloff zur Vermehrung, sondern sie sind auch auf eine Reihe von Nährstoffen angewiesen. Zu letzteren gehören insbesondere Stickstoffe und/oder Phosphor. Untersuchungen haben gezeigt, dass die Zudosierung von ca. 15 g Stickstoff und/oder 5 g Phosphor pro kg abzubauendem CSB zu günstigen Ergebnissen führt. Die Dosierung kann dabei vereinfacht werden, wenn der Stickstoff in Form von Salpetersäure und Phosphor in Form von Phosphorsäure zugeführt wird. Zu den Nährstoffen zählen weiterhin Spurenelemente. Letztere erhalten alle für die katalytische Aktivität der Enzyme nötigen Ionen in Form von Salzen.

Die Zugabe von Nährstoffen zu dem Abwasser erfolgt in solchen Mengen, dass die durch die Verdünnung entstehenden Verluste an Mikroorganismen ausgeglichen werden. Die Menge der zugefügten Nährstoffe ist bei dem beschriebenen Verfahren proportional zur Menge des zugeführten Abwassers bzw. zur Schmutzfracht, gemessen in CSB.

Auch nach Austritt des Abwassers über den Ablauf 2 sind im Abwasser Mikroorganismen enthalten, die gut abbaubar sind. Sie werden in einer Kläranlage entweder in den Klärschlamm integriert und helfen beim Abbau des Rest-CSB oder werden von den Filtereinrichtungen des Belebtschlamms, den höheren Mikroorganismen, eliminiert.

Die Mikroorganismen können bei der Erfindung aus dem vorgeklärten Abwasser abgetrennt werden. Dies ist beispielsweise durch Fällung mit Eisen möglich. Dabei ergibt sich eine vergleichsweise geringe Schlamm-Menge. Der Vorteil des beschriebenen Verfahrens liegt allerdings in einer deutlich höheren Reinigungsleistung von über 90 % des CSB.

Das erfindungsgemäße Verfahren hat den Vorteil, dass hochbelastete Abwässer mit zum Teil erheblichen Schwankungen in ihrer Zusammensetzung und im pH-Wert, die in einer Kläranlage zu Störungen führen können, vergleichmäßigt und in bisher nicht erreichbarer Weise gereinigt werden können.

Im Rahmen des Erfindungsgedankens sind zahlreiche Abwandlungen möglich. So können etwa die Belüftungdüsen im Reaktor anders angeordnet werden, solange die abwärts gerichtete Strömung im Innenrohr erhalten bleibt. Selbstverständlich können die Komponenten der Anordnung anders angeordnet sein, als dies in Fig. 1 dargestellt ist. Die Nährstoffe und Neutralisationsmittel können z. B. auch dem Zulauf direkt zugegeben werden. Auch die Zusammensetzung der Nährstoffe kann eine andere sein.

Die Abhängigkeit von Redoxpotential und pH-Wert kann durch zahlreiche alternative Anordnungen realisiert werden. So kann auf die Recheneinheit 32 und den gesonderten Speicher verzichtet werden, wenn der Regler 31 mit einer einstellbaren Korrektureinrichtung versehen ist, die den pH-Istwert entsprechend der voreingestellten Kennliniensteigung in die benötigte Führungsgröße umsetzt.

## Patentansprüche

1. Verfahren zum Abbau organischer Abwasser-Schadstoffe unter Verwendung frei suspendierter Bakterien, wobei das Abwasser in einem Reaktionsraum umgewälzt und belüftet wird, die zugeführte Luftmenge entsprechend den Behandlungsbedingungen des Abwassers geregelt wird und Redoxpotential- und pH-Werte überwacht werden,
**dadurch gekennzeichnet**,
a) dass verschiedenen pH-Werten zugeordnete Redoxpotentialwerte ermittelt werden, bei denen Schadstoffe im Reaktor optimal biologisch abgebaut werden;
b) dass aus den ermittelten Werten eine Kennlinie gebildet und gespeichert wird;
c) dass aus den betrieblich gemessenen pH-Werten (pH-Istwerten) und den Kennlinienwerten in einem Prozessrechner eine Führungsgröße gebildet und mit betrieblich gemessenen Redoxpotentialwerten (Redoxpotential-Istwerten) verglichen wird; und
d) dass die zugeführte Luftmenge in Abhängigkeit von den Redoxpotential-Istwerten unter Führung der pH-Istwerte geregelt wird.

2. Verfahren nach Anspruch 1,
**dadurch gekennzeichnet,**
**dass** eine Teilmenge des Abwassers aus dem Reaktionsraum abzweigt, über einen Mess- und Steuerbeipass geleitet und an einer anderen Stelle wieder in den Reaktionsraum zurückgeführt wird; und dass Prozessvariable, z. B. pH-, Redoxpotential- und Temperatur-Istwerte in dem Mess- und Steuerbeipass gemessen werden.

3. Verfahren nach Anspruch 2,
**dadurch gekennzeichnet,**
**dass** die Temperatur des Abwassers im Mess- und Steuerbeipass geregelt wird.

4. Verfahren nach Anspruch 3,
**dadurch gekennzeichnet,**
**dass** das Abwasser im Reaktionsraum auf einer Temperatur im Bereich von 20 bis 40 °C, vorzugsweise zwischen 35 und 39 °C gehalten wird.

5. Verfahren nach einem der Ansprüche 1 bis 4,
**dadurch gekennzeichnet,**
**dass** als Reaktionsraum ein Hochreaktor verwendet wird, in desen Bodenbereich die geregelte Luftmenge im wesentlichen gleichmäßig verteilt zugeführt und mit dem zu behandelnden umgewälzten Abwasser vermischt wird.

6. Verfahren nach einem der Ansprüche 1 bis 5,
**dadurch gekennzeichnet,**
**dass** dem Abwasser für die Vermehrung der Mikroorganismen notwendige Nährstoffe in einem vorgegebenen Verhältnis zur Menge des neu zugeführten Abwassers beigemischt werden.

7. Verfahren nach einem der Ansprüche 1 bis 6,
**dadurch gekennzeichnet,**
**dass** Neutralisationsmittel zugemischt werden, wenn das zugeführte Abwasser einen pH-Wert außerhalb eines Bereiches von 3 bis 12 hat.

8. Anordnung zum Abbau organischer Abwasser-Schadstoffe, insbesondere zur Durchführung des Verfahrens nach einem der Ansprüche 1 bis 7,
**dadurch gekennzeichnet,**
**dass** in einem Hochreaktor (1) ein Reaktionsraum zur Behandlung des schadstoffbelasteten Abwassers vorgesehen ist, dass der Hochreaktor Mittel zum Zuführen des zu behandelnden Abwassers (6, 7) und zum geregelten Zuführen von Luft (19, 5) aufweist; dass Mittel zum Messen des pH-Wertes (14) und des Redoxpotentialwertes (15) des behandelten Abwassers vorgesehen sind; dass ein Prozessrechner (30) mit den Mitteln zum Messen des pH-Wertes und des Redoxpotentials sowie mit einem die zugeführte Luftmenge steuernden Stellglied (19) gekoppelt und mit einer Speichereinrichtung (33) versehen ist; und dass der Prozessrechner (30) so ausgebildet ist, dass er die dem Abwasser zugeführte Luftmenge in Abhängigkeit von den gemessenen Redoxpotentialwerten (15) unter Führung der gemessenen pH-Werte (14) nach einer in der Speichereinrichtung (33) gespeicherten vorgegebenen Beziehung regelt.

9. Anordnung nach Anspruch 8,
**dadurch gekennzeichnet,**
**dass** Mittel (16) zum Messen der Temperatur des behandelten Abwassers und Mittel (20, 21) zur Temperatureinstellung des behandelten Abwassers mit dem Prozessrechner (30) gekoppelt sind.

10. Anordnung nach Anspruch 8 oder 9,
**dadurch gekennzeichnet,**
**dass** das Abwasser über eine Beipassleitung (11) umgewälzt wird, die Beipassleitung in Bodennähe des Reaktionsraums in den Hochreaktor mündet und alle Mess-Stellen (14 bis 16) in der Beipassleitung angeordnet sind.

11. Anordnung nach Anspruch 10,
**dadurch gekennzeichnet,**
**dass** Nährstoffdosiermittel (25) und pH-Wert-Neutralisierungsmittel (23, 24) mit der Beipassleitung (11) verbunden sind.

12. Anordnung nach einem der Ansprüche 8 bis 11,
**dadurch gekennzeichnet,**
**dass** ein beidseitig offenes Rohr (3) mit allseitigem Abstand vertikal im Hochreaktor eingebaut ist und dass sich das Rohr am oberen Ende trichterförmig erweitert.

13. Anordnung nach einem der Ansprüche 8 bis 12,
**dadurch gekennzeichnet,**
**dass** oberhalb des Füllspiegels des Hochreaktors eine Beregnungseinrichtung zum Zerstören von Schaumbläschen angeordnet ist.

## Claims

1. A method for decomposition of organic waste water pollutants by using freely suspended bacteria, wherein the waste water is recirculated in a reaction chamber and is aerated, the supplied amount of air is regulated in accordance with the treatment requirements of the waste water, and the redox potential and pH values are monitored,
**characterized in that**
a) redox potential values associated with different pH values, at which the pollutants are optimally biologically decomposed in the reactor, are determined;
b) a characteristic curve is formed from the determined values and stored;
c) from the operationally measured pH values (actual pH values) and the characteristic curve values, a command value is formed in a process computer and is compared with operationally measured redox potential values (actual redox potential values), and
d) the supplied amount of air is controlled in dependency on the actual redox potential values by guiding the actual pH values.

2. The method in accordance with claim 1,
**characterized in that**
a portion of the waste water is diverted from the reaction chamber, is conducted over a measuring and regulating bypass and is returned back into the reaction chamber at a different location, and that process variables, for example actual values of pH, redox potential and temperature, are measured in the measuring and regulating bypass.

3. The method in accordance with claim 2,
**characterized in that**
the temperature of the waste water is controlled in the measuring and regulating bypass.

4. The method in accordance with claim 3
**characterized in that**
the waste water in the reaction chamber is maintained at a temperature in the range between 20 to 40 °C, preferably between 35 and 39 °C.

5. The method in accordance with one of claims 1 to 4,
**characterized in that**
a vertical reactor is used as the reaction chamber, whose bottom area is supplied essentially evenly with the regulated amount of air, which is mixed with the recirculated waste water to be treated.

6. The method in accordance with one of claims 1 to 5,
**characterized in that**
nutrients required for the propagation of the microorganisms are admixed to the wast water in a predetermined proportion with the amount of the newly supplied waste water.

7. The method in accordance with one of claims 1 to 6,
**characterized in that**
neutralizing agents are added, if the supplied waste water has a pH value outside of a range between 3 to 12.

8. An arrangement for the decomposition of organic waste water pollutants, in particular for executing the method in accordance with one of claims 1 to 7,
**characterized in that**
a reaction chamber for the treatment of the waste water charged with pollutants is provided in a vertical reactor (1), that the vertical reactor has means for supplying the waste water to be treated (6, 7) and for the regulated supply of air (19, 5); that means for measuring the pH value (14) and the redox potential value (15) of the treated waste water are provided, that a process computer (30) is connected with the means for measuring the pH value and the redox value, as well as with a regulating member (19) controlling the supplied amount of air, and is provided with a memory device (33); and that the process computer (30) is designed in such a way that it controls the amount of air supplied to the waste water as a function of the measured redox potential values (15) by guiding the measured pH values (14) in accordance with a predetermined relationship stored in the memory (33).

9. The arrangement in accordance with claim 8,
**characterized in that**
the means (16) for measuring the temperature of the treated waste water, and means (20, 21) for adjusting the temperature of the treated waste water are coupled with the process computer (30).

10. The arrangement in accordance with claim 8 or 9,
**characterized in that**
the waste water is recirculated through a bypass line (11), the bypass line leads in the vertical reactor in the vicinity of the bottom of the reaction chamber, and all measuring locations (14 to 16) are arranged in the bypass line.

11. The arrangement in accordance with claim 10,
**characterized in that**
nutrient metering means (25) and pH value neutralizing means (23, 24) are connected with the bypass line (11).

12. The arrangement in accordance with one of claims 8 to 11
**characterized in that**
a pipe (3), open at both ends, has been vertically installed with spacing on all sides in the vertical reactor, and that the pipe is widened in the form of a funnel at the top.

13. The arrangement in accordance with one of claims 8 to 12
**characterized in that**
a sprinkling device for destroying foam bubbles is arranged above the fill level of the vertical reactor.

## Revendications

1. Procédé pour la dégradation de substances organiques toxiques dans les eaux usées par utilisation de bactéries en libre suspension, les eaux usées étant mises en circulation et aérées dans un espace de réaction, la quantité d'air apportée étant régulée conformément aux conditions de traitement des eaux usées, et le potentiel redox ainsi que le pH étant surveillés,
**caractérisé en ce**
a) que sont déterminés différents pH affectés à des potentiels redox, pour lesquels des substances toxiques sont biodégradées de façon optimale dans le réacteur ;
b) qu'une courbe caractéristique est formée à partir des valeurs déterminées, et mémorisée ;
c) qu'à partir des pH mesurés en exploitation (pH effectifs) et des valeurs de la courbe caractéristique est formée dans un ordinateur industriel une grandeur pilote qui est comparée avec les potentiels redox mesurés en exploitation (potentiels redox effectifs) ; et
d) que la quantité d'air apportée est régulée en fonction des potentiels redox effectifs sous le pilotage des pH effectifs.

2. Procédé selon la revendication 1,
**caractérisé en ce**
**qu'**une partie des eaux usées est prélevée de l'espace de réaction, passe à travers un bipasse de mesure et de commande et est réintroduite à un autre endroit dans l'espace de réaction ; et que les variables du processus, par exemple les valeurs effectives du pH, du potentiel redox et de la température sont mesurées dans le bipasse de mesure et de commande.

3. Procédé selon la revendication 2,
**caractérisé en ce que**
la température des eaux usées est régulée dans le bipasse de mesure et de commande.

4. Procédé selon la revendication 3,
**caractérisé en ce que**
les eaux usées dans l'espace de réaction sont maintenues à une température comprise dans la plage de 20 à 40 °C, de préférence entre 35 et 39 °C.

5. Procédé selon l'une des revendications 1 à 4,
**caractérisé en ce**
**qu'**est utilisé comme espace de réaction un réacteur vertical dans la zone inférieure duquel la quantité d'air régulée est apportée et répartie pratiquement uniformément, et mélangée aux eaux usées à traiter en circulation.

6. Procédé selon l'une des revendications 1 à 5,
**caractérisé en ce que**
des substances nutritives nécessaires aux eaux usées pour la reproduction des micro-organismes sont mélangées dans un rapport donné à la quantité des eaux usées nouvellement introduites.

7. Procédé selon l'une des revendications 1 à 6,
**caractérisé en ce que**
des neutralisants sont mélangés si les eaux usées introduites ont un pH qui n'est pas dans la plage comprise entre 3 et 12.

8. Disposition pour la dégradation de substances organiques toxiques dans les eaux usées, notamment pour réaliser le procédé selon l'une des revendications 1 à 7,
**caractérisée en ce que**
dans un réacteur vertical (1) est prévu un espace de réaction pour le traitement des eaux usées chargées de substances toxiques, que le réacteur vertical présente des moyens pour introduire les eaux usées à traiter (6, 7) et pour introduire l'air de façon régulée (19, 5) ; que sont prévus des moyens pour mesurer le pH (14) et le potentiel redox (15) des eaux usées traitées ; qu'un ordinateur industriel (30) est relié aux moyens pour mesurer le pH et le potentiel redox ainsi qu'à un actionneur (19) commandant la quantité d'air introduite, et est muni d'un dispositif de mémorisation (33); et que l'ordinateur industriel (30) est conçu de sorte qu'il régule la quantité d'air introduite dans les eaux usées en fonction des potentiels redox mesurés (15) sous le pilotage des pH mesurés (14) et selon un rapport donné mémorisé dans le dispositif de mémorisation (33).

9. Disposition selon la revendication 8,
**caractérisée en ce que**
le moyen (16) pour mesurer la température des eaux usées traitées et les moyens (20, 21) pour le réglage de la température des eaux usées traitées sont reliés à l'ordinateur industriel (30).

10. Disposition selon la revendication 8 ou 9,
**caractérisée en ce que**
les eaux usées sont mises en circulation dans une conduite bipasse (11), que la conduite bipasse débouche à proximité du fond de l'espace de réaction dans le réacteur vertical et que tous les points de mesure (14 à 16) sont disposés dans la conduite bipasse.

11. Disposition selon la revendication 10,
**caractérisée en ce que**
le moyen de dosage des substances nutritives (25) et les moyens de neutralisation du pH (23, 24) sont reliés à la conduite bipasse (11).

12. Disposition selon l'une des revendications 8 à 11,
**caractérisée en ce**
**qu'**un tube ouvert aux deux bouts (3) est monté à la verticale avec une certaine distance de tous les côtés dans le réacteur vertical et que le tube s'élargit en forme d'entonnoir à son extrémité supérieure.

13. Disposition selon l'une des revendications 8 à 12,
**caractérisée en ce**
**qu'**au-dessus du niveau de remplissage du réacteur vertical est disposé un dispositif d'aspersion pour détruire des bulles de mousse.
